# EUROPÄISCHE PATENTSCHRIFT

(11) **EP 1 448 720 B1**
(45) Veröffentlichungstag und Bekanntmachung des Hinweises auf die Patenterteilung: **23.08.2017**
(21) Anmeldenummer: 02772404.6
(22) Anmeldetag: 30.10.2002
(51) Int. Cl.: C09D 5/00, C09D 5/20, C09D 133/06

(54) **EMULSIONSPOLYMERISATE ALS ABZIEHLACK**
EMULSION POLYMERS AS A STRIPPABLE COATING
POLYMERES EN EMULSION UTILISES COMME REVETEMENT PELABLE

(30) Priorität: 12.11.2001 DE 10155184
(43) Veröffentlichungstag der Anmeldung: 25.08.2004
(73) Patentinhaber: Covestro Deutschland AG, 51373 Leverkusen (DE)
(72) Erfinder: GERTZMANN, Rolf, 51377 Leverkusen (DE); PETZOLDT, Joachim, 40789 Monheim (DE); MÜLLER, Heino, 51375 Leverkusen (DE); IRLE, Christoph, 08037 Barcelona (ES)
(74) Vertreter: Levpat
(86) Internationale Anmeldenummer: PCT/EP2002/012107
(87) Internationale Veröffentlichungsnummer: WO 2003/042306

(56) Entgegenhaltungen:
- EP-A- 0 421 609
- EP-A- 1 132 413
- WO-A1-02/24346
- DE-C- 19 736 535
- US-A- 5 891 261

## Beschreibung

Die vorliegende Erfindung betrifft wässrige Überzugmittel, ein Verfahren zu deren Herstellung und Verwendung als Abziehlack zum temporären Schutz von Oberflächen.

Wässrige Überzugmittel zum temporären Schutz hochwertiger Produkte, wie z.B. Glas, Metall und Kunststoff gegen mechanische Beschädigung oder Umwelteinflüsse sind bekannt. Dies gilt insbesondere für den Schutz von Kraftfahrzeugen, elektronischen Geräten und Einrichtungsgegenständen.

Im Kraftfahrzeugbau kann man Systeme nach der Art ihrer Handhabung, dass bedeutet die Art des Aufbringens und der Entfernung des temporären Schutzes, in drei Klassen einteilen. Eine Möglichkeit ist die Wachskonservierung, die ein lösemittelhaltiges System zum Entfernen der Beschichtung erforderlich macht und somit neben einer starken ökologischen Belastung zu einer Schädigung der zu schützenden Oberfläche führen kann. Ein weiteres System besteht aus Schutzfolien, die zwar in einfacher Weise abgezogen, aber sehr aufwendig und damit kostenintensiv von Hand aufgebracht werden müssen. Als drittes System sind wässrige, lösemittelfreie Dispersionen bekannt, die durch Rollen oder Spritzen aufgebracht werden und anschießend verfilmen. Der daraus entstandene kontinuierliche Film kann später in einfacher Weise als zusammenhängender Film abgezogen und recycled bzw. verbrannt werden.

In der EP-A 1 072 652 werden beispielsweise recyclisierbare Systeme offenbart, die aus einem Gemisch aus mindestens zwei unterschiedlichen wässrigen, lösemittelfreien Polyurethandispersionen bestehen.

In der EP-A 0 421 609 werden wässrige Beschichtungsmittel beschrieben, die ein Bindemittel auf Basis eines Acrylats und eines Polyurethans enthalten.

In der DE-A 196 49 263 werden Überzugmittel beschrieben, die sich zum Schutz hochwertiger Güter, insbesondere Lackoberflächen, eignen. Dabei wird ein Gemisch aus zwei Emulsionspolymerisaten eingesetzt, wobei es sich bei einem um ein (Meth)-acrylatcopolymersiat und beim anderen um ein Ethen/Vinylacetat Copolymerisat handelt. Nachteilig ist hier, dass bei der Herstellung der Überzugmittel einerseits die beiden Komponenten gemischt werden müssen, was einen zusätzlichen Verfahrensschritt bedeutet und andererseits der Einsatz von Ethen bei der Herstellung des Copolymerisats ein aufwendiges Produktionsequipment erfordert.

In der DE-C1 197 36 535 werden Basisbeschichtungszusammensetzungen offenbart, die als Bindemittel eine Acrylatdispersion und eine Polyurethandispersion enthalten

Ein Verfahren zum temporären Schutz von Oberflächen durch Polymerschichten wird ebenfalls in der DE-A 196 21 037 offenbart. Die dort verwendeten olefinsischen Co-Polymerisate werden bevorzugt durch Hochdruckpolymerisation hergestellt, was wiederum einen hohen verfahrenstechnischen Aufwand voraussetzt.

In der EP-A 1 132 413 werden Abziehlacke auf Basis zweier in Wasser dispergierbaren Komponenten, einem Polyurethan-Polyharnstoff-Polymerisat und einem Emulsionspolymerisat, beschrieben.

DE-A 196 52 728 beschreibt ein Verfahren zum Aufbringen eines entfernbaren Transportschutzes durch Verwendung wässriger Dispersionen, insbesondere Poly(meth)acrylat- bzw. Polyvinylacetat-Dispersionen. Die beschriebenen Kunststofffilme verfügen jedoch nur über eine unzureichende Bewitterungsbeständigkeit.

In der GB 1,327,030 wird die Verwendung von Acrylnitril enthaltenden Terpolymeren zur Herstellung abziehbarer Folien beschrieben. Der Einsatz von Acrylnitril im Polymeren ist jedoch aus ökologischen Gründen unerwünscht.

In der US-A 5,716,667 wird ein Verfahren zum temporären Schutz von Automobilkörpern offenbart, in welchem eine abziehbare wässrige Beschichtungszusammensetzung eingesetzt wird, die im Wesentlichen Emulsionspolymerisate von (Meth-)acrylaten und UV-Absorber enthält. Die Abziehfähigkeit des ausgehärteten Films vom Untergrund wird durch Zusatz kostenintensiver, wasserabweisender Komponenten wie Siliconen, Fluorkohlenwasserstoffen oder Wachse zum Bindemittel erreicht.

Die WO 02/24326 offenbart Abziehlackzusammensetzungen, die neben einem wässrigen Emulsionspolymerisat noch weitere Copolymere enthalten können, die jedoch hinsichtlich ihrer Glasübergangstemperaturen nicht näher beschrieben sind.

Die Aufgabe der vorliegenden Erfindung bestand somit in der Bereitstellung von wässrigen Überzugmitteln für den temporären Schutz von Gegenständen, die über eine verbesserte Bewitterungsstabilität und Abziehfähigkeit verfügen und gleichzeitig aus einfach zugänglichen und kostengünstigen Ausgangsmaterialien herstellbar sein sollten und die im Stand der Teclmik beschriebenen Nachteile nicht aufweisen.

Es wurde nun gefunden, dass Überzugmittel basierend auf einer Kombination zweier Polymer-Dispersionen, wobei eine davon sich als Anreibemedium für Pigmente eignet, eine verbesserte Bewitterungsstabilität und Abziehfähigkeit der Lacke gewährleisten.

Gegenstand der vorliegenden Erfindung sind wässrige Überzugmittel enthaltend
A) mindestens ein wässriges Emulsionspolymerisat,
B) eine oder mehrere Polymer-Dispersion(en) als Anreibemedium,
C) mindestens ein Pigment sowie
D) gegebenenfalls Neutralisationsmittel und
E) gegebenenfalls Hilf- und Zusatzmittel,
dadurch gekennzeichnet. dass die Glastemperatur des Emulsionspolymerisats A) zwischen 0°C und 35°C liegt und die Polymer-Dispersion B) ein Emulsionspolymerisat ist mit einem Carboxylgruppengehalt bzgl. des Festharzes zwischen 1 bis 5 Gew.% und die Glastemperatur des Emulsionspolymerisats B) zwischen 35°C und 105°C liegt, und der pH-Wert des wässrigen Überzugmittels zwischen 7,5 und 10 liegt.

Die erfindungsgemäßen wässrigen Überzugmittel enthalten
(I) 48 bis 88 Gew.-%, bevorzugt 54 bis 75 Gew.-%., besonders bevorzugt 62 bis 70 Gew.-% der Komponente A),
(II) 2 bis 20 Gew.-%, bevorzugt 5 bis 15 Gew.-%, besonders bevorzugt 7 bis 12 Gew.-% der Komponente B),
(III) 10 bis 50 Gew.-%, bevorzugt 15 bis 40 Gew.-%, besonders bevorzugt 20 bis 30 Gew.-% der Komponente C),
(IV) 0 bis 1 Gew.-%, bevorzugt 0 bis 0,8 Gew.-%, besonders bevorzugt 0,1 bis 0,6 Gew.-% der Komponente D),
(V) 0 bis 4 Gew.-%, bevorzugt 0,1 bis 2 Gew.-%, besonders bevorzugt 0,15 bis 1,2 Gew.-% der Komponente E),
wobei sich alle Angaben auf den nichtflüchtigen Anteil beziehen und die Summe der Komponenten 100 Gew.-% ergibt.

Das in den erfindungsgemäßen Überzugmitteln enthaltende wässrige Emulsionspolymerisat A) enthält mindestens drei verschiedene olefinisch ungesättigte Monomere (a1), (a2) und (a3).

Die Komponente A) ist herstellbar durch Copolymerisation von Acrylsäureestem (a1), Methacrylsäureestem (a2) und Carboxylgruppen enthaltenden polymersierbaren Monomeren (a3) sowie gegebenenfalls anderen polymerisierbaren ungesättigten Monomeren (a4).

Die Glastemperatur der in den erfindungsgemäßen Überzugmitteln enthaltende Emulsionspolymerisat A) liegt bevorzugt zwischen 10°C und 25°C.

Das Emulsionspolymerisat A) enthält bevorzugt 95 bis 65 Gew.-%, bevorzugt 79 bis 90 Gew.-% an Acrylsäure- (a1) und/oder Methacrylsäueester (a2), 0,2 bis 5 Gew.-%, bevorzugt 0,5 bis 1,5 Gew.-% Carboxylgruppen enthaltende Monomere (a3) und 0 bis 30 Gew.-%, bevorzugt 7 bis 20 Gew.-% andere polymerisierbare ungesättigte Monomere (a4), wobei sich alle .Angaben auf den nichtflüchtigen Anteil beziehen und die Summe der Komponenten 100 Gew.-% ergibt.

Das Gewichtsmittel des Molgewichtes (Mw) des Emulsionspolymerisates A) beträgt mindestens 200.000 g/mol, bevorzugt mindestens 350.000 g/mol, besonders bevorzugt mindestens 500.000 g/mol.

Geeignete Monomere (a1) bzw. (a2) sind Ester der Acryl- (a1) bzw. Methacrylsäure (a2). Ebenfalls geeignete Monomere (a1) bzw. (a2) sind solche Monomere, die funktionelle Gruppen, z.B. Hydroxy- oder Carbonylgruppen tragen, wie beispielsweise Hydroxyethyl-, Hydroxypropyl-, Hydroxybutyl-acrylat bzw. -methacrylat und Acetoxyethylmethacrylat. Es ist auch möglich nicht-ionisch-hydrophilierte Acrylate (a1) bzw. Methacrylate (a2), wie z.B. Methoxypolyethlyenglycol-acrylat bzw. -methacrylat einzusetzen. Weitere geeignete Monomere sind Bis-acrylate (a1) bzw. Bismethacrylate (a2), wie z.B. Hexandioldi-acrylat bzw. -methacrylat, Ethylenglykol-dimethacrylate, Oligo- und Polyethylenglykoldimethacrylate. Bevorzugte Monomere sind C₁-C₁₀-Alkylester und C₅-C₁₀-Cycloalkylester der Acryl- (a1) und Methacrylsäure (a2), wie z.B. Methyl-, Ethyl, n-Propyl-, iso-Propyl-, n-Butyl, iso-Butyl-, tert.-Butyl, Hexyl-, Cyclohexyl-, Isobornyl- und 2-Ethylhexyl-acrylat (a1) bzw. -methacrylat (a2). Mischungen der genannten Monomere sind ebenfalls geeignet.

Als Monomere (a3) kommen Carboxylgruppen tragende Monomere, wie z.B. Itacon-, Malein-, Fumarsäure und ähnliche in Frage sowie Monoester der ungesättigten C₄-C₈-Dicarbonsäuren. Bevorzugt werden als Komponente (a3) Acryl- und/oder Methacrylsäure verwendet. Gemische der genannten Monomere sind ebenfalls geeignet.

Geeignete andere polymerisierbare Monomere (a4) sind beispielsweise Vinylester, Vinylchlorid, Vinylmethylether, Vinylisobutylether, 2-Ethylhexylvinylether, Acrylamide, Methacrylamide, sowie von (a3) verschiedene ionische Gruppen tragende Monomere, z.B. 2-Acrylamido-2-methylpropansulfonsäure. Bevorzugte Monomere (a4) sind beispielsweise Styrol, Methylstyrol, Vinyltoluol sowie Divinylbenzol. Besonders bevorzugt ist Styrol.

Die in den erfindungsgemäßen Überzugmitteln enthaltenden Polymerisate A) sowie ihre Herstellung sind dem Fachmann aus dem Stand der Technik bekannt. Sie lassen sich durch die üblichen Emulsionspolymerisationsverfahren herstellen, wie sie z.B. in Houben-Weyl, Methoden der org. Chemie, Band E 20/I, Makromolekulare Stoffe, Georg-Thieme-Verlag, Stuttgart, 1987 beschrieben sind.

Für die Herstellung des Emulsionspolymerisats A) ist es bevorzugt, ionische Emulgatoren wie z.B. Emulgator Agitan^{®} 951 (Fa. Bayer AG, Leverkusen) zu verwenden, wobei ¼ bis ½ der Gesamtemulgatormenge in die Wasservorlage gegeben wird und die übrige Emulgatormenge während der Polymerisation parallel zum Monomerstrom zugeführt wird. Dabei wird die zweite Emulgatormenge mit Wasser und einem peroxidischem Initiator, z.B. Ammoniumpersulfat vermischt und langsamer dosiert als der Strom der Monomermischung, so dass zum Schluss der Reaktion prinzipiell nur eine wässrige Lösung aus Emulgator und Initiator dosiert wird. Eine Verringerung des Restmonomerengehalts nach Beendigung der Zugabe der wässrigen Emulgator/Initiatorlösung kann in einer dem Fachmann bekannten Weise durch nachträgliche Addition eines Redoxinitiatorsystems, z.B. bestehend aus einem oganischem Peroxid wie Trigonox^{®} AW 70 (Fa. Akzo Nobel, Düren, Germany), Ammoniumpersulfat, Fe(II) Salzen und Trilon^{®} B (Fa. BASF AG, Ludwigshafen) sowie Rongalit^{®} C (Fa. BASF AG, Ludwigshafen) erreicht werden (siehe z.B. in Römp Lexikon Chemie, Georg Thieme Verlag 1999, Stuttgart/New York).

Der pH-Wert des Emulsionspolymerisats A) kann an dieser Stelle oder später durch Zugabe von Base(n) auf einen pH-Wert von 6 bis 9, bevorzugt von 7 bis 8 eingestellt werden. Als Base(n) kommen alkalische organische und/oder alkalische anorganische Verbindungen in Frage. Bevorzugt sind neben wässriger Ammoniaklösung flüchtige primäre, sekundäre und tertiäre Amine.

Die im erfindungsgemäßen Überzugmittel enthaltende Komponente B) hat eine auf Festharz bezogene Säurezahl von 7 bis 75 mg KOH/g und dient als Anreibemedium für die Komponenten C), D) und E).

Als Komponente B) sind wässrige Sekundär-Dispersionen geeignet, die bevorzugt kein Lösungsmittel enthalten. Unter Sekundär-Dispersionen sind allgemein solche Polymerisate zu verstehen, bei denen das bereits vorliegende Polymer in einem zweiten Verfahrensschritt dispergiert wird. Beispiele für Sekundär-Dispersionen sind Acryl-, Alkyd-, Epoxid-, Polyester- und Polyurethanharze (z.B. Römp Lexikon, Lacke und Farben, 10. Auflage, S. 150).

Geeignete Polyesteracrylatdispersionen sind beispielsweise in der EP-A 0 543 228 (Spalte 14, Zeilen 53 bis Spalte 15, Zeilen 22) beschrieben, Polyacrylatdispersionen beispielsweise in der EP-A 0 358 979 (Seite 6, Z. 50 bis Seite 7, Z. 57). Bevorzugt sind lösemittelfreie Polyurethan-Polyacrylat-Hybriddispersionen, wie sie z.B. in der EP-A 0 189 945 (Seite 23, Beispiel VIII) beschrieben sind sowie Emulsionspolymerisate mit einem Carboxylgruppengehalt [berechnet als COOH, MG = 45,01 g/mol] bzgl. des Festharzes bevorzugt zwischen 1,5 bis 4 Gew.-%, wie sie
z.B. nach dem üblichen Emulsionspolymersationsverfahren erhalten werden können (z.B. in Houben-Weyl, Methoden der org. Chemie, Band E 20/I, Makromolekulare Stoffe, Georg-Thieme-Verlag, Stuttgart, 1987).

Die Emulsionspolymerisate B) weisen Glastemperaturen bevorzugt zwischen 35°C bis 80°C, auf.

Bevorzugt als Komponente B) sind lösemittelfreie Polyurethandispersionen, die nach dem Aceton- oder dem Schmelzdispergierverfahren hergestellt werden und in Houben-Weyl, Methoden der org. Chemie, Bd. E 20, 1987, Seite 1659 bis 1681 beschrieben sind. Kombinationen aus härteren und weicheren Polyurethanen sind - besonders bevorzugt. Weiterhin können auch Mischungen der verschiedenen Dispersionstypen eingesetzt werden.

Als Komponente C) sind alle in der Lackchemie bekannten Pigmente geeignet. Als Beispiele für geeignete Pigmente sind Titandioxide und Zinkoxide zu nennen. Die Pigmente sind in der Regel oberflächenmodifiziert, um eine Verträglichkeit mit den Bindemitteln zu gewährleisten.

Als Komponente D) kommen alkalische organische und/oder alkalische anorganische Verbindungen als Neutralisierungsmittel in Frage. Bevorzugt sind neben wässriger Ammoniaklösung, flüchtige primäre, sekundäre und tertiäre Amine, wie z.B. Ethylamin, Dimethylamin, Dimethylethanolamin, Triethylamin, Morpholin, Piperidin, Diethanolamin, Triethanolamin, Diisopropylamin, 2-Amino-2-methylpropanol und 2-N,N-Dimethylamino-2-methylpropanol oder Gemische dieser Verbindungen.

Als Komponente E) kommen handelsübliche und dem Fachmann bekannte Lackadditive in Frage, die in der Lage sind einen positiven Einfluss auf die Applizierbarkeit, den Verlauf, das Untergrundbenetzungsvermögen, die Stabilität und die Optik des Lacks bzw. der Beschichtung auszuüben. Bevorzugt sind als Komponente E) Antiabsetzmittel, Untergrundbenetzer und Verdicker. Als Verdicker sind handelsübliche Verdicker geeignet, wie beispielsweise natürliche organische Verdicker, z.B. Dextrine oder Stärke, organisch abgewandelte Naturstoffe, z.B. Celluloseether oder Hydroxyethylcellulose, organisch vollsynthetische, z.B. Poly(meth)acrylverbindungen oder Polyurethane sowie anorganische Verdicker, z.B. Betonite oder Kieselsäuren. Bevorzugt werden organisch vollsynthetische Verdicker eingesetzt. Besonders bevorzugt werden Acrylatverdicker eingesetzt, die vor der Zugabe gegebenenfalls weiter mit Wasser verdünnt werden. Bevorzugte Untergrundbenetzer sind silikonfrei.

Ebenfalls Gegenstand der vorliegenden Erfindung ist ein Verfahren zur Herstellung der erfindungsgemäßen wässrigen Überzugmittel, dadurch gekennzeichnet, dass zunächst eine Anreibepaste durch Mischen der Komponenten B), C) und D) mit Teilen der Komponente E) hergestellt wird und anschließend die Komponente A) sowie restliche Teile der Komponente E) mit der Anreibepaste homogen vermischt werden.

Im erfindungsgemäße Verfahren erfolgt die Herstellung des Anreibepaste unter zur Hilfenahme einer handelsüblichen Perlmühle.

In einer bevorzugten Ausführungsform des erfindungsgemäßen Verfahrens erfolgt die Herstellung beispielsweise durch Vermischung von Komponente B) mit 1/5 bis 1/20 der Gesamtmenge an Komponente D), anschließende Zugabe eines handelsüblichen silikonfreien Untergrundbenetzungsmittels (Komponente E) und eines handelsüblichen Antiabsetzmittels (Komponente E) sowie eines Pigments (Komponente C).Hierbei dient die Komponente B) als Anreibemedium für Komponente C). Diese Mischung wird dann z.B. in einem geeigneten Dispergieraggregat wie z.B. einer Perlmühle bis zu einer Korngröße von 5- 30 µm, bevorzugt 10 - 15 µm vermahlen.

Anschließend wird die Anreibepaste mit der gesamten Menge an Komponente A), der verbliebenen Menge der Komponente D) und einem oder mehreren handelsüblichen Verdicker/n (Komponente E) innig vermischt. Die Verdickermenge wird so gewählt, dass eine Lackviskosität von 1 bis 500 Pa.s bei D = 0,1 s⁻¹ ; 0,01 bis 0,5 Pa.s bei D = 10⁴ s⁻¹, bevorzugt von 2 bis 400 Pa.s bei D = 0,1s⁻¹, 0,05 bis 0,4 Pa.s bei D = 10⁴ s⁻¹ und besonders bevorzugt von 3 bis 300 Pa.s bei D = 0,1⁻¹ und 0,08 bis 0,3 Pa.s bei D = 10⁴ s⁻¹ erreicht wird.

Der pH- Wert des erfindungsgemäßen Überzugmittels liegt zwischen 7,5 und 10, bevorzugt zwischen 8 und 9.

Vor der weiteren Verarbeitung wird der Lack 10 bis 36 h, bevorzugt 12 bis 30 h und besonders bevorzugt 18 bis 24 h bei Raumtemperatur gelagert.

Die erfindungsgemäßen wässrigen Überzugmittel lassen sich nach den üblichen Methoden der Lacktechnologie durch Tauchen, Rakeln, Gießen, Sprühen, Spritzen, Pinseln oder Walzen applizieren und anschließend bei 20°C bis 150°C trocknen. Bevorzugt ist die Applikation des Lacks mit einer Airless Spritzanlage.

Weiterer Gegenstand der Erfindung sind Abziehlacke enthaltend die erfindungsgemäßen Überzugmittel zum temporären Schutz für Oberflächen.

Die das erfindungsgemäße Überzugmittel enthaltenden Abziehlacke sind bewitterungsstabil, lösemittelfrei, leicht abziehbar und ausreichend dehnbar.

Geeignete Substrate für die Appliaktion abziehbarer Lacke sind beispielsweise Glas, Metalle, wie z.B. Aluminium, hochglänzende, verchromte Gegenstände, Edelstahl und Kunststoffe, wie z.B. Poylcarbonate, Polyacrylate, Polyester, Polyvinylchloride, Polystyrole und Polyurethane. Bevorzugte Substrate sind lackierte. Oberflächen. Besonders bevorzugt handelt es sich bei den mit den erfindungsgemäßen Überzugmitteln zu beschichtenden Substraten um lackierte Oberflächen von Kraftfahrzeugkarosserien..

### Referenz Beispiele

Zur Bestimmung der Molgewichte wurde folgendes GPC-Equipment (geeicht auf Polystyrol Standard) verwendet.

| | |
|---|---|
| Pumpe: | Hewlett Packard 1100 |
| Injektor: | Hewlett Packard 1100 |
| Detector 1: | Kontron 240 nm |
| Detector 2: | Hewlett Packard RI 1047A |
| | |
| Säulen: | 1. Nucleogel GPC 106-10 300 x 7,8 mm; Macherey-Nagel |
| | 2. Nucleogel GPC 104-10 300 x 7,8 mm; Macherey-Nagel |
| | 3. Nucleogel GPC 500-10 300 x 7,8 mm; Macherey-Nagel |
| | 4. Nucleogel GPC 100-10 300 x 7,8 mm; Macherey-Nagel |
| Eluent: | Tetrahydrofuran |
| Flussrate: | 0.6 mL/min |
| Druck: | ca. 70 bar |

### A) Herstellung der Komponente A

### Beispiel 1

In einem 4-Liter Vierhalskolben werden 1670 g demineralisiertes Wasser und 28 g Emulgator Agitan^{®} 951 (ionischer, nicht reaktiver Emulgator, 80 %ige Lösung in Wasser, Bayer AG, Leverkusen, Germany) bei 75°C homogen miteinander vermischt. Dann wird der Lösung innerhalb von 5 Min. 150 g einer Mischung aus 53,7 g Methylmethacrylat, 20,6 g Styrol, 74,2 g Butylacrylat und 1,5 g Acrylsäure zugesetzt und für weitere 5 Min. verrührt bevor der Saat (10 % der gesamten Monomermenge) innerhalb von 5 Min. eine Mischung aus 1,0 g Ammoniumperoxodisulfat in 29 g demineralisiertem Wasser zugesetzt wird. Nach vollständiger Zugabe wird 15 Min. bei 75°C gerührt, dann innerhalb von 3 h eine Mischung aus 483,3 g Methylmethacrylat, 185,1 Styrol, 668,4 g Butylacrylat und 13,5 g Acrylsäure zugegeben. Zur gleichen Zeit beginnt man innerhalb von 3,5 h 150 g einer 1 %igen wässrigen Ammoniumperoxodisulfatlösung zuzugeben. Nach vollständiger Zugabe wird für weitere 60 Min. bei 75°C nachgerührt, bevor die Emulsion auf 50°C abgekühlt wird und innerhalb von 3 Min. nacheinander jeweils 50 %ige wässrige Lösungen aus 20 g Trilon^{®} B (Na-Salz des EDTA, BASF, Ludwigshafen, Germany) Lösung, 16 g Trigonox^{®} AW 70 (Akzo Nobel Chem. GmbH, Düren, Germany) und 11 g Rongalit^{®} C (BASF AG, Ludwigshafen, Germany) zugesetzt wird. Nach erfolgter Zugabe wird 60 Min. bei 50°C nachgerührt, bevor die Emulsion auf 25°C abgekühlt und mit einer 10 %igen wässrigen Ammoniaklösung auf einen pH von 7,9 eingestellt wird.

Die Emulsion weist folgende physikalische Daten auf:

| | |
|---|---|
| pH (10 %ige Lösung) | 7,9 |
| Viskosität | 140 m Pa s (D = 50 s⁻¹) |
| Festkörpergehalt | 44,2 % |
| Mittlere Teilchengröße (LKS) | 76 nm |
| T_{g} (berechnet) | 14 °C |
| M_{w} (GPC) | 650.000 g/mol |

Weitere Emulsionspolymerisate mit unterschiedlicher Acrylatzusammensetzung wurden nach dem unter Beispiel 1 aufgeführten Verfahren hergestellt. Die verschiedenen Monomerzusamnensetzungen (Beispiel 2 - 5, erfindungsgemäß) sind in Tabelle 1 aufgelistet.

**Tabelle 1**

| erfindungsgemäße Beispiele 2 bis 5 | | | | |
|---|---|---|---|---|
| | **Bsp. 2** | **Bsp. 3** | **Bsp. 4** | **Bsp. 5** |
| Methylmethacrylat | 49,5 Gew.-% | 42,1 Gew.-% | 49,9 Gew.-% | 25,3 Gew.-% |
| Butylacrylat | 49,5 Gew.-% | 49,5 Gew.-% | 35,5 Gew.-% | 60,0 Gew.-% |
| Styrol | - | 7,4 Gew.-% | 13,7 Gew.-% | 13,7 Gew.-% |
| Acrylsäure | 1,0 Gew.-% | 1,0 Gew.-% | 1,0 Gew.-% | 1,0 Gew.-% |
| pH (10 %ige Lsg.) | 7,7 | 8,1 | 7,5 | 7,8 |
| Viskosität [mPas] (D = 50 s⁻¹) | 14 | 12 | 317 | 60 |
| Festkörper [%] | 45 | 40 | 44 | 43 |
| Mittlere Teilchengröße [nm] | 63 | 61 | 79 | 84 |
| Tg(berechnet) [°C] | 13,7 | 13,8 | 35,0 | -0,1 |
| M_{w} (GPC) [g/mol} | 600.000 | 580.000 | 630.000 | 580.000 |

### Beispiel 6 (Vergleichsbeispiel)

### Herstellung des Emulsionspolymerisats nach US-A 5,716,667, Beispiel[A-1]

Die Polymerisation wurde entsprechend dem Beispiel [A1] der o.g. Anmeldung nachgestellt.

Der in der Anmeldung verwendete ionische Emulgator Newcol^{®} 707SF (Nippon Nyulcazai Co., Ltd.) wurde durch den ionischen Emulgator Agitan^{®} 951 (Bayer AG, Leverkusen, Germany) ersetzt.

In einem 2-Liter Vierhalskolben bestückt mit Thermometer, Tropftrichter, Rückflusskühler und Rührer werden 312 g demineralisiertes Wasser und 0,7 g Emulgator Agitan^{®} 951 (ionischer, nicht reaktiver Emulgator, 80 %ige Lösung in Wasser, Bayer AG, Leverkusen) bei 80°C unter Stickstoffatmosphäre homogen miteinander vermischt. Dann wird bei 80°C direkt vor der Zugabe der Preemulsion, die über 3 h zugetropft wird und aus 350 g demineralisiertem Wasser, 440 g Methylmethacrylat, 352 g n-Butylacrylat, 8,0 g Acrylsäure 0,7 g Ammoniumpersulfat besteht, 0,2 g Ammoniumpersulfat zugesetzt. Dreißig Minuten nach vollständiger Zugabe wird 0,4 g Ammoniumpersulfat gelöst in 7 g demineralisiertem Wasser innerhalb von 30 Min. addiert und weitere 2 h bei 80°C nachgerührt. Anschließend wird auf 30°C gekühlt und mit 25 %iger wässriger Ammoniaklösung auf pH = 7,9 eingestellt und im Anschluss daran auf RT abgekühlt.

| | |
|---|---|
| pH (10 %ige Lösung) | 7,9 |
| Viskosität | 55 mPa s (D = 50 s⁻¹) |
| Festkörpergehalt | 53,0 % |
| Mittlere Teilchengröße (LKS) | 124 nm |
| T_{g} (berechnet) | 21,6°C |
| Mw (GPC) | 152.000 g/mol |

### B) Herstellung der Komponente B

### B.1) Polyurethandispersionen

### Beispiel 7

Die Herstellung der Polyurethandispersion erfolgt nach der in EP-A 1 072 652, Beispiel 1 (Dispersion UA) angegebenen Weise.

In einem Reaktionsgefäß werden 170 g (0,1 mol) eines Polyesters aus Adipinsäure, 1,6-Hexandiol und Neopentylglykol mit einem durchschnittlichen Molekulargewicht von 1.700 g/mol und 2 Gew.-% OH, 30 Minuten bei 120°C und 10 mbar unter Rühren entwässert. Unter Stickstoff trägt man 13,4 g (0,1 mol) Dimethylolpropionsäure und 111 g (0,5 mol) Isophorondiisocyanat ein. Nach 1 h Reaktionszeit bei 110°C wird der Ansatz auf 60°C abgekühlt und in 100 g Aceton gelöst. Nach Zugabe von 18 g (0,2 mol) 1,4-Butandiol wird 22 h bei 50°C nachgerührt. Der NCO-Gehalt beträgt 1,60 % (berechnet 2,04 %). Man verdünnt mit 500 g Aceton. Zum NCO-Prepolymer wird bei 50°C eine Mischung aus 10,6 g (0,062 mol) Isophorondiamin, 1,07 g (0,016 mol) 25 %ige Ammoniaklösung und 60 g Wasser gegeben. Anschließend rührt man 5 h bei 50°C nach. Es wird mit 3,4 g (0,05 mol) 25 %iger Ammoniaklösung neutralisiert und mit 450 g Wasser dispergiert. Das Aceton entfernt man bis 50°C und 150 mbar und erhält so eine weiße Dispersion mit einem Feststoffgehalt von 38,8 %.

Der Neutralisationsgrad beträgt 50 %.

### Beispiel 8

Die Herstellung der Polyurethandispersion erfolgt nach der in der EP-A 1 072 652, Beispiel 6 (Dispersion UB) angegebenen Weise.

In einem Reaktionsgefäß werden 60 g (0,035 mol) eines Polyesters aus Adipinsäure, 1,6-Hexandiol und Neopentylglykol (molares Verhältnis der Glycole 67 : 33) mit einem durchschnittlichen Molekulargewicht von 1.700 g/mol, 90,5 g (0,108 mol) eines Polyesters aus Adipinsäure und 1,6-Hexandiol mit einem durchschnittlichen Molekulargewicht von 840 g/mol und 17,8 g eines Polyethers aus n-Butanol, 83 % Ethylenoxid und 17 % Propylenoxid mit einem durchschnittlichen Molekulargewicht von 2240 g/mol 30 Min. bei 120°C und 15 mbar unter Rühren entwässert. Unter Stickstoff trägt man 20,75 g (0,155 mol) Dimethylolpropionsäure ein und gibt bei 75°C 192 g (0,86 mol) Isophorondiisocyanat in einem Gu zu. Nach 3 h Reaktionszeit bei 75°C werden zu dem Ansatz 13,25 g (0,147 mol) 1,4-Butandiol und 5,25 g (0,04 mol) Trimethylolpropan gegeben. Nach weiteren 3,5 Std. Rührzeit beträgt der NCO-Gehalt 7,50 % (berechnet 7,51 %). Man verdünnt das Prepolymer mit 992 g Aceton. Zum NCO-Prepolymer wird bei 50°C eine Mischung aus 16,3 g (0,27 mol) Ethylendiamin, 20,2 g (0,12 mol) 9,7 %ige Ammoniaklösung und 200 g Wasser gegeben. Anschließend rührt man 5 h bei 50°C nach, neutralisiert mit einer Lösung aus 13,6 g (0,078 mol) 9,7 %iger Ammoniaklösung und 10 g Wasser. Nach 15 Minuten Nachrühren wird durch Zugabe von 525 g Wasser dispergiert. Das Aceton entfernt man bis 50°C und 150 mbar und erhält so eine weiße Dispersion mit einem Feststoffgehalt von 35 %.

Der Neutralisationsgrad beträgt 50 %.

### B.2) Emulsionspolymerisat

### Beispiel 9

In einem 6 1-Reaktor, der mit einem Rührer versehen ist, wird eine Lösung aus 2,0 g Emulgator Agitan^{®} 951 (80 %ig in Wasser, Fa. Bayer AG, Leverkusen), 98,8 g Synperonic^{®} PE/L 61 (nichtionisches Tensid, Fa. Uniqema, Everberg, Belgien) und 2167 g destilliertes Wasser vorgelegt und auf eine Innentemperatur von 80°C erwärmt. Danach wird eine Lösung 1) aus 35,2 g Methacrylsäurehydroxypropylester, 142,3 g Styrol, 20,2 g n-Butylacrylat und 6,2 g Acrylsäure in ca. 15 Min. in den Autoklav gepumpt. Gleichzeitig wird eine weitere Lösung 2) aus 1,0 g Ammonimnperoxodisulfat und 53,3 g destilliertem Wasser dosiert. Anschließend wird 30 Min. bei der vorgegebenen Innentemperatur von 80°C gerührt. Danach werden die mit Stickstoff überlagerten Lösungen 3), bestehend aus 316,4 g Methacrylsäurehydroxypropylester, 1280,4 g Styrol, 181,6g n-Butylacrylat und 56,2 g Acrylsäure und Lösung 4), bestehend aus 6,2 g Ammoniumperoxodisulfat, 50,0 g Emulgator Agitan^{®} 951 (80 %ig) und 321,0 g destilliertem Wasser, innerhalb von 6 h gleichmäßig und gleichzeitig zugepumpt. Im Anschluss daran wird 2 h nachgerührt. Mit der Initiatorlösung 5) (1,0 g Ammoniumperoxodisulfat und 53,3 g destilliertes Wasser) wird nachaktiviert. Dann wird 4 h nachgerührt und anschließend auf eine Innentemperatur von möglichst unter 30°C abgekühlt. Daraufhin wird mit 27,0 g wässriger Ammoniaklösung (25 %ig) in 187 g Wasser neutralisiert; hierbei wird die Neutralisationslösung innerhalb von ca. 10 Min. unter Rühren zu dem Autoklaveninhalt zugepumpt.

| | |
|---|---|
| Feststoffgehalt | 43,5 Gew.-% |
| pH-Wert | 8,3 |
| Viskosität bei D = 45,4 s⁻¹ und 23°C | 39 mPa*s |
| Mittlerer Teilchendurchmesser (LKS) | 139 nm |

### C) Herstellung des erfindungsgemäßen Lacks

20,369 g einer Anreibepaste, die 30 Min. in einer handelsüblichen Perlmühle zu einer Korngröße von 10 µm vermahlen und ca. 3 h bei 60°C kurzgealtert wird, bestehend aus 8,990 g einer 38 %igen Polyurethan-Dispersion UA (Beispiel 7) 2,430 g einer 35 %igen Polyurethan-Dispersion UB (Beispiel 8), 0,041 g einer 90 %igen wässerigen Lösung 2-Amino-2-methyl-1-propanol, 0,101 g eines marktüblichen silikonfreien Untergrundbenetzungsmittels (Hydropalat^{®} 110, Cognis & Inks, Düsseldorf, Germany), 0,064 g eines Antiabsetzmittels (Aerosil^{®} R 972, Degussa, Germany) sowie 8,750 g Titandioxid (Tronox^{®} R-KB-4, Kerr McGee Pigments GmbH & Co. KG, Krefeld, Germany) werden mit 69,200 g der Polyacrylat-Dispersion aus Beispiel 1, 0,260 g 90 %iges 2-Amino-2-methyl-1-propanol in Wasser und 1,040 g einer vorher angesetzten 1:1-Mischung aus einem 30 %igen handelsüblichen Acrylat-Verdickers (Acrysol^{®} DR 73, Rohm & Haas Company, Frankfurt, Germany) und dest. Wasser innig verrührt und vor der weiteren Verarbeitung 24 h bei Raumtemperatur gelagert.

### D) Vergleichsbeispiel: Herstellung eines Lacks ohne Komponente B

Der Lack wird unter Zuhilfenahme eines Dissolvers zur Dispergierung hergestellt, ohne jedoch die Komponente(n) B) einzusetzen.

87,468 g der 53 %igen Polyacrylat-Dispersion aus Beispiel 6 werden mit 0,245 g eines marktüblichen silikonhaltigen Benetzungsmittels (Tegowet^{®} 250, Tego Chemie Service GmbH - Degussa, Essen, Germany), 0,464 g UV-Absorber (Tinuvin^{®} 1130, Ciba Spezialitätenchemie, Lampertheim, Germany), 0,233 g wasserverdünnbares, handelsübliches Lichtschutzmittel vom Typ HALS (hindered amine light stabilizers) (Sanduvor^{®} 3055, Clariant Huningue, France) vorgemischt und mittels Dissolver unter Rühren 6,0 g Titandioxid (Tronox^{®} R-KB-4, Kerr McGee Pigments GmbH & Co. KG, Krefeld, Germany) zugegeben. Dabei entsprechen die 6.0 g an Titandioxid dem maximalen Anteil, der sich überhaupt in der beschriebenen Rezeptur verarbeiten ließ. Im Vergleich zu Beispiel C sind dies jedoch nur 50 % der dort verarbeiteten TiO₂-Menge.

### E) Applikation der Lacks

Die Applikation der erfindungsgemäßen Lacke und des Vergleichslacks erfolgt mit einem Rakel (210 µm) auf dem entsprechenden Substrat.

Als Untergrund für den Abziehlack dient bei den Versuchen neben Glas auch eine mit einem handelsüblichen 2K-Polyurethan Klarlack der Fa. Audi aus der Serienlackieung beschichtete Fläche.

### F) Eigenschaften der erhaltenen Lacke

Die in Tabelle 2 aufgeführten Eigenschaften der Lacke bzw. der Beschichtungen sind mit den jeweils angegebenen Emulsionspolymerisaten erhalten worden.

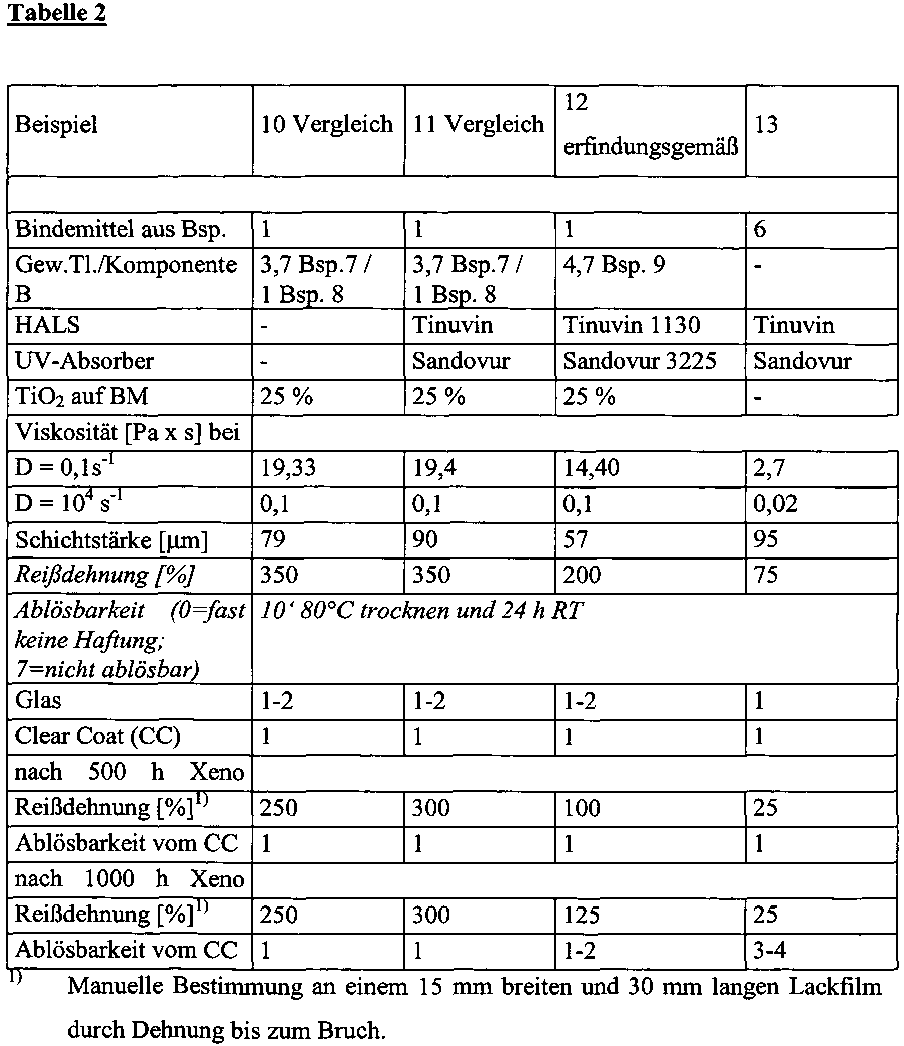

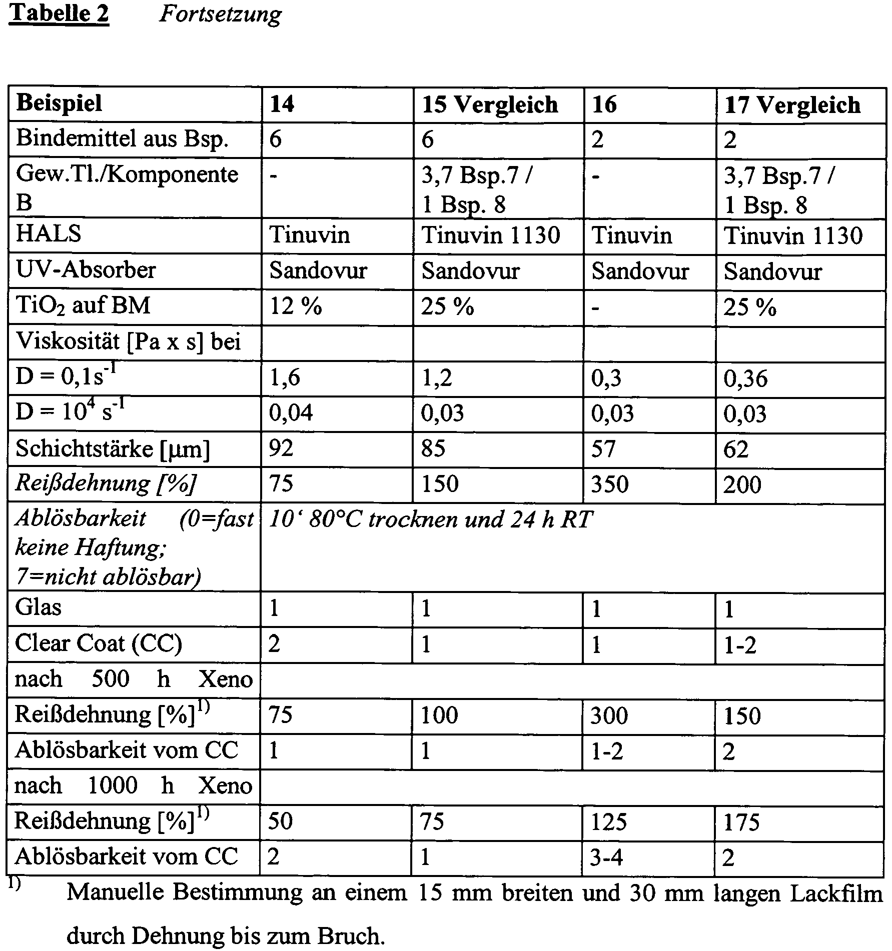

## Patentansprüche

1. Wässrige Überzugmittel enthaltend
A) mindestens ein wässriges Emulsionspolymerisat,
B) eine oder mehrere Polymer-Dispersion(en) als Anreibemedium,
C) mindestens ein Pigment sowie
D) gegebenenfalls Neutralisationsmittel und
E) gegebenenfalls Hilf- und Zusatzmittel,
**dadurch gekennzeichnet, dass** die Glastemperatur des Emulsionspolymerisats A) zwischen 0°C und 35°C liegt und die Polymer-Dispersion B) ein Emulsionspolymerisat ist mit einem Carboxylgruppengehalt bzgl. des Festharzes zwischen 1 bis 5 Gew.-% und die Glastemperatur des Emulsionspolymerisats B) zwischen35°Cund 105°C liegt, und der pH-Wert des wässrigen Überzugmittels zwischen 7,5 und 10 liegt.

2. Wässrige Überzugmittel gemäß Anspruch 1 enthaltend
(I) 48 bis 88 Gew.-% der Komponente A),
(II) 2 bis 20 Gew.-% der Komponente B),
(III) 10 bis 50 Gew.-% der Komponente C),
(IV) 0 bis 1 Gew.-% der Komponente D),
(V) 0 bis 4 Gew.-% der Komponente E),
wobei sich alle Angaben auf den nichtflüchtigen Anteil beziehen und die Summe der Komponenten 100 Gew.-% ergibt.

3. Wässrige Überzugmittel gemäß Anspruch 1 oder 2, **dadurch gekennzeichnet, dass** die Komponente E) Antiabsetzmittel, Untergrundbenetzer und Verdicker sind.

4. Wässrige Überzugmittel gemäß einem oder mehrerer der Ansprüche 1 bis 3, **dadurch gekennzeichnet, dass** das wässrige Emulsionspolymerisat A) mindestens drei verschiedene olefinisch ungesättigte Monomere enthält.

5. Wässrige Überzugmittel gemäß Anspruch 4, **dadurch gekennzeichnet, dass** das wässrige Emulsionspolymerisat A) Acrylsäureester (a1), Methacrylsäureester (a2) und Carboxylgruppen enthaltenden polymersierbaren Monomere (a3) sowie gegebenenfalls andere polymerisierbare ungesättigte Monomere (a4) enthält.

6. Wässrige Überzugmittel gemäß einem oder mehrerer der Ansprüche 1 bis 5, **dadurch gekennzeichnet, dass** das wässrige Emulsionspolymerisat A) ein Gewichtsmittel des Molgewichtes (Mw) von mindestens 200.000 g/mol aufweist.

7. Verfahren zur Herstellung wässriger Überzugmittel gemäß Anspruch 1, **dadurch gekennzeichnet, dass** zunächst eine Anreibepaste durch Mischen der Komponenten B), C) und D) mit Teilen der Komponente E) hergestellt wird und anschließend die Komponente A) sowie restliche Teile der Komponente E) mit der Anreibepaste homogen vermischt werden.

8. Abziehlacke enthaltend wässrige Überzugmittel gemäß Anspruch 1 zum temporären Schutz für Oberflächen.

## Claims

1. Aqueous coating agent comprising
A) at least one aqueous emulsion polymer,
B) one or more polymer dispersions as grinding medium,
C) at least one pigment, and also
D) if desired, neutralizing agents, and
E) if desired, auxiliaries and additives,
**characterized in that** the glass transition temperature of the emulsion polymer A) is between 0°C and 35°C and the polymer dispersion B) is an emulsion polymer having a carboxyl group content based on resin solids of between 1 to 5% by weight and the glass transition temperature of the emulsion polymer B) is between 35°C and 105°C, and the pH of the aqueous coating agent is between 7.5 and 10.

2. Aqueous coating agent according to Claim 1, comprising
(I) from 48 to 88% by weight of component A),
(II) from 2 to 20% by weight of component B),
(III) from 10 to 50% by weight of component C),
(IV) from 0 to 1% by weight of component D),
(V) from 0 to 4% by weight of component E),
all figures relating to the nonvolatile fraction, and the sum of the components making 100% by weight.

3. Aqueous coating agent according to Claim 1 or 2, **characterized in that** components E) are antisettling agents, substrate wetters, and thickeners.

4. Aqueous coating agent according to one or more of Claims 1 to 3, **characterized in that** the aqueous emulsion polymer A) includes at least three different olefinically unsaturated monomers.

5. Aqueous coating agent according to Claim 4, **characterized in that** the aqueous emulsion polymer A) comprises acrylic esters (a1), methacrylic esters (a2), and carboxyl-containing polymerizable monomers (a3) and also, if desired, other polymerizable unsaturated monomers (a4).

6. Aqueous coating agent according to one or more of Claims 1 to 5, **characterized in that** the aqueous emulsion polymer (A) has a weight average of the molar weight (Mw) of at least 200 000 g/mol.

7. Process for preparing aqueous coating agent according to Claim 1, **characterized in that** first of all a grinding paste is prepared by mixing components B), C), and D) with portions of component E) and subsequently component A) and remaining portions of component E) are mixed homogeneously with the grinding paste.

8. Strippable coatings comprising aqueous coating agent according to Claim 1 for temporary protection of surfaces.

## Revendications

1. Agent de revêtement aqueux, contenant :
A) au moins un polymère en émulsion aqueux,
B) une ou plusieurs dispersions de polymère en tant que milieu de broyage,
C) au moins un pigment et
D) éventuellement des agents de neutralisation et
E) éventuellement des adjuvants et additifs,
**caractérisé en ce que** la température de transition vitreuse du polymère en émulsion A) est comprise entre 0 °C et 35 °C et la dispersion de polymère B) est un polymère en émulsion ayant une teneur en groupes carboxyle par rapport à la résine solide comprise entre 1 et 5 % en poids, et la température de transition vitreuse du polymère en émulsion B) est comprise entre 35 °C et 105 °C, et le pH de l'agent de revêtement aqueux est compris entre 7,5 et 10.

2. Agent de revêtement aqueux selon la revendication 1, contenant :
(I) 48 à 88 % en poids du composant A),
(II) 2 à 20 % en poids du composant B),
(III) 10 à 50 % en poids du composant C),
(IV) 0 à 1 % en poids du composant D),
(V) 0 à 4 % en poids du composant E),
toutes les données se rapportant à la fraction non volatile et la somme des composants étant de 100 % en poids.

3. Agent de revêtement aqueux selon la revendication 1 ou 2, **caractérisé en ce que** les composants E) sont des agents anti-dépôt, des agents de mouillage du substrat et des épaississants.

4. Agent de revêtement aqueux selon une ou plusieurs des revendications 1 à 3, **caractérisé en ce que** le polymère en émulsion aqueux A) contient au moins trois monomères oléfiniquement insaturés différents.

5. Agent de revêtement aqueux selon la revendication 4, **caractérisé en ce que** le polymère en émulsion aqueux A) contient des esters de l'acide acrylique (a1), des esters de l'acide méthacrylique (a2) et des monomères polymérisables contenant des groupes carboxyle (a3), ainsi qu'éventuellement d'autres monomères insaturés polymérisables (a4).

6. Agent de revêtement aqueux selon une ou plusieurs des revendications 1 à 5, **caractérisé en ce que** le polymère en émulsion aqueux A) présente une moyenne en poids du poids moléculaire (Mw) d'au moins 200 000 g/mol.

7. Procédé de fabrication d'un agent de revêtement aqueux selon la revendication 1, **caractérisé en ce qu'**une pâte de broyage est tout d'abord formée par mélange des composants B), C) et D) avec des parties du composant E), puis le composant A), ainsi que les parties restantes du composant E), sont mélangés de manière homogène avec la pâte de broyage.

8. Vernis pelable contenant un agent de revêtement aqueux selon la revendication 1 pour la protection temporaire de surfaces.
